# EUROPEAN PATENT APPLICATION

(11) **EP 4 636 730 A1**
(43) Date of publication of application: **22.10.2025**
(21) Application number: 22968073.1
(22) Date of filing: 15.12.2022
(51) Int. Cl.: G08G 1/123

(54) **VEHICLE DISPATCH SYSTEM, VEHICLE DISPATCH CONTROL DEVICE, AND VEHICLE DISPATCH METHOD**

(71) Applicant: Nissan Motor Co., Ltd., Kanagawa 221-0023 (JP)
(72) Inventor: WATANABE Masaki, Atsugi-shi, Kanagawa 243-0123 (JP); HASHIMOTO Takashi, Atsugi-shi, Kanagawa 243-0123 (JP)
(74) Representative: Osha BWB
(86) International application number: PCT/JP2022/046250
(87) International publication number: WO 2024/127594

(57) **Abstract**

A vehicle dispatch system determines whether or not scheduled pick-up points of a plurality of users are identical (S5), transmits, when the scheduled pick-up points of the plurality of users are identical, pieces of route information for the plurality of users to all of a plurality of vehicles before authenticating a user boarding the vehicle (S6), selects a piece of route information for the authenticated user (S12 to S14), and drives the vehicle based on the selected piece of route information (S13 and S15).

## Description

### Technical Field

The present invention relates to a vehicle dispatch system, a vehicle dispatch control device, and a vehicle dispatch method.

### Background Art

In PTL 1, a technology that, when a plurality of users request dispatch of vehicles to an identical area, changes dispatch destinations of the vehicles in such a way as to dispatch a vehicle arriving at the area first to a user arriving at a vehicle dispatch point first is disclosed.

### Citation List

### Patent Literature

PTL 1: JP 2011-081717 A

### Summary of Invention

### Technical Problem

However, when a plurality of vehicles each of which is dispatched to one of a plurality of users arrive at the same scheduled pick-up point, it is sometimes difficult for a user to determine which vehicle the user is required to board. As a result, there is a risk that time required for a user to board a vehicle increases, which leads to deterioration in service.

An object of the present invention is to, when a plurality of vehicles are dispatched to the same scheduled pick-up point, make it smoother for a user to board a dispatched vehicle.

### Solution to Problem

According to an aspect of the present invention, there is provided a vehicle dispatch system including: a vehicle provided for use in provision of a transportation service of a user; and a vehicle dispatch control device configured to dispatch the vehicle to the user. The vehicle dispatch control device includes a first controller configured to execute processing including:
acquiring information about destinations of a plurality of the users;
dispatching each of a plurality of the vehicles to one of the plurality of users; setting, for each of the plurality of users, route information relating to a route from a scheduled pick-up point to the destination of the user;
determining whether or not scheduled pick-up points of the plurality of users are identical; and transmitting, when scheduled pick-up points of the plurality of users are identical, pieces of route information for the plurality of users to all of the plurality of vehicles before authenticating a user boarding the vehicle. The vehicle includes a second controller configured to execute processing including: selecting, after authentication of the user boarding the vehicle, a piece of route information for the authenticated user from pieces of route information received from the vehicle dispatch control device; and
driving the vehicle based on the selected piece of route information or assisting driving of the vehicle based on the selected piece route information.

### Advantageous Effects of Invention

According to an aspect of the present invention, it is possible to, when a plurality of vehicles are dispatched to the same scheduled pick-up point, make it smoother for a user to board a dispatched vehicle.

### Brief Description of Drawings

FIG. 1 is a schematic configuration diagram of an example of a vehicle dispatch system of an embodiment;
FIG. 2 is a schematic explanatory diagram of a vehicle dispatch method of the present invention;
FIG. 3 is a block diagram of an example of a functional configuration of a first controller of a vehicle dispatch control device;
FIG. 4 is an explanatory diagram of an example of arrival timing of users and service vehicles at a scheduled pick-up point;
FIG. 5 is a block diagram of an example of a functional configuration of a second controller of a service vehicle;
FIG. 6 is a block diagram of an example of a functional configuration of a third controller of an electronic device;
FIG. 7 is a flowchart of an example of processing performed by the vehicle dispatch system at the time of vehicle dispatch; and
FIG. 8 is a flowchart of an example of processing performed by the vehicle dispatch system after transmitting auxiliary route information.

### Description of Embodiments

Hereinafter, the embodiments of the present disclosure will be described with reference to the drawings. Each drawing is schematic, and may differ from the reality. The following embodiments of the present disclosure are examples of devices and methods for embodying the technological idea of the present disclosure, and the technological idea of the present disclosure does not limit the structure, arrangement and the like of the components to the following ones. The technological idea of the present disclosure may be modified in various ways within the technological scope defined by the claims.

### (Configuration)

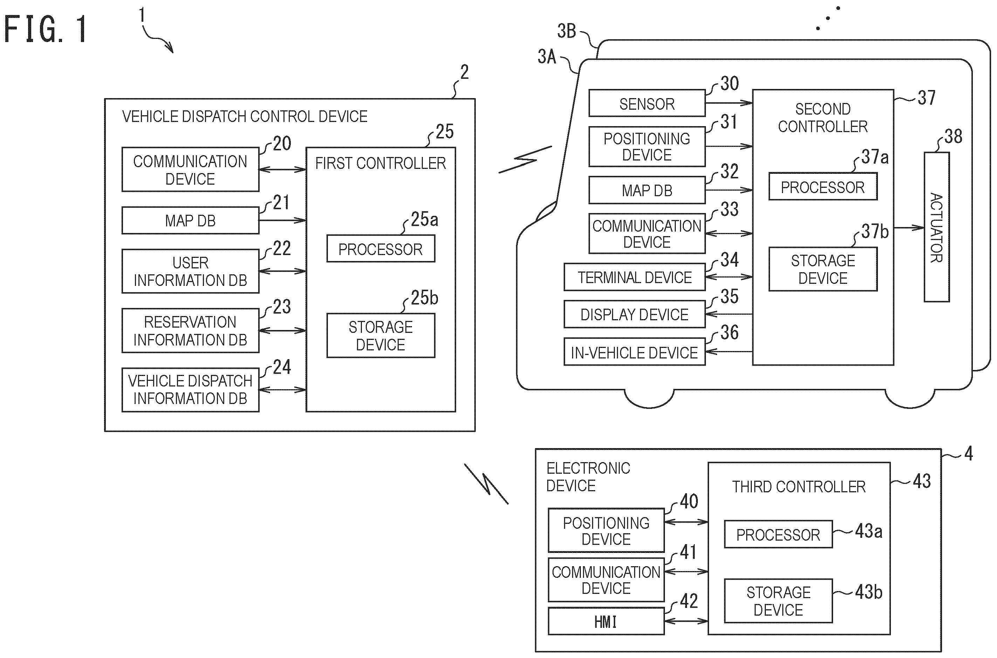

FIG. 1 is a schematic configuration diagram of an example of a vehicle dispatch system of an embodiment. A vehicle dispatch system 1 of the embodiment is a system that provides a vehicle dispatch service to dispatch a vehicle in response to a vehicle dispatch request in which a user makes a request for dispatch of a vehicle. Herein, a vehicle that is provided for use in the vehicle dispatch service of the vehicle dispatch system 1 is referred to as "service vehicle".

The vehicle dispatch system 1 includes a vehicle dispatch control device 2, a plurality of service vehicles 3A, 3B, and so on, and an electronic device 4 that a user carries. Hereinafter, the service vehicles 3A, 3B, and so on are sometimes collectively referred to as "service vehicles 3".

The vehicle dispatch control device 2 includes a communication device 20, a map database (in the drawings, referred to as "map DB") 21, a user information database (in the drawings, referred to as "user information DB") 22, a reservation information database (in the drawings, referred to as "reservation information DB") 23, a vehicle dispatch information database (in the drawings, referred to as "vehicle dispatch information DB") 24, and a first controller 25.

The communication device 20 provides a communication function between the first controller 25 and an external device. A communication system used by the communication device 20 may be, for example, wired communication or wireless communication based on a public mobile communication network, satellite communication, road-to-vehicle communication with the service vehicles 3, or the like.

The first controller 25 transmits and receives data to and from the service vehicles 3 and the electronic device 4, using the communication device 20.

In the map database 21, map information of an area in which the vehicle dispatch system 1 provides the vehicle dispatch service is stored. The map information may include road information relating to roads in the area in which the vehicle dispatch system 1 provides the vehicle dispatch service. For example, the map information may be a navigation map that can be used for calculation of a route from a pick-up point at which a user boards a service vehicle 3 to a destination (in the following description, sometimes referred to as "navigation map"). The navigation map includes, as information in units of roads, information about road nodes that indicate reference points on a road reference line (for example, a line at the center of a road) and information about road links that indicate forms of road sections between road nodes.

In the user information database 22, user information that is information about a user who uses the vehicle dispatch service through the vehicle dispatch system 1 is stored. For example, at the time of using the vehicle dispatch service provided by the vehicle dispatch system 1, a user creates an account in the vehicle dispatch system 1 after agreeing with predetermined terms and conditions and the like, and registers required information (information about a name, an address, an account for settlement, and the like of a passenger user). For example, in the user information database 22, identification information and required information of the user may be stored as the user information.

In addition, for example, history information when the user used the vehicle dispatch system 1 in the past may be stored as the user information. For example, the history information may include history information about an in-vehicle environment of a service vehicle 3 when the user boarded the service vehicle 3 in the past.

For example, the history information about an in-vehicle environment may include information about a usage history of in-vehicle devices 36 of the service vehicle 3. The in-vehicle devices 36 include, for example, an in-vehicle audio device, an air conditioning device, a lighting device, and the like. The information about the usage history of the in-vehicle devices 36 may include history information such as music played by the in-vehicle audio device, a radio program to which the user listened with the in-vehicle audio device and selection of a radio station, temperature and humidity in the vehicle interior set in the air conditioning device, and settings of illumination.

In the reservation information database 23, reservation information of the vehicle dispatch service is stored. For example, in the reservation information database 23, required reservation information, such as identification information of a user, a desired pick-up point, a destination (desired drop-off point), and the number of passengers, is stored.

In the vehicle dispatch information database 24, vehicle dispatch information that is information about a dispatch state of a service vehicle 3 dispatched to a user is stored. For example, the vehicle dispatch information may include identification information of a dispatched service vehicle 3, identification information of a user to whom the service vehicle 3 is dispatched, information about a scheduled pick-up point that is a point at which the user is scheduled to board the service vehicle 3 (that is, a point at which the user and the service vehicle 3 are scheduled to meet), and a route information of a route from the scheduled pick-up point to a destination of the user.

The first controller 25 is a computer device that executes information processing in the vehicle dispatch control device 2. The first controller 25 may include a processor 25a and a peripheral component, such as a storage device 25b.

The processor 25a may be, for example, a central processing unit (CPU) or a micro-processing unit (MPU). The storage device 25b may include one of a semiconductor storage device, a magnetic storage device, and an optical storage device. The storage device 25b may include registers, a cache memory, and a memory, such as a read only memory (ROM) or a random access memory (RAM), that is used as a main storage device.

Functions of the first controller 25, which will be described below, are achieved by, for example, the processor 25a executing computer programs stored in the storage device 25b. Functions and processing of the first controller 25 will be described later.

Each service vehicle 3 is a vehicle that is operated in response to a request for the vehicle dispatch service from a user (a vehicle used in a socalled on-demand type transportation) and may be, for example, a shared taxi or a robot taxi. For example, the service vehicle 3 may be an autonomous driving vehicle that is autonomously driven by a second controller 37 in accordance with route information transmitted from the vehicle dispatch control device 2 without involvement of a driver.

The service vehicle 3 may be a manually driven vehicle that is driven by a driver (a person). In this case, the service vehicle 3 is capable of assisting the driver in driving the service vehicle 3 in accordance with route information transmitted from the vehicle dispatch control device 2 by presenting the route information to the driver.

Herein, an example of a case where the service vehicle 3 is an autonomous driving vehicle will be described.

Each service vehicle 3 includes sensors 30, a positioning device 31, a map database 32, a communication device 33, terminal devices 34, a display device 35, the in-vehicle devices 36, the second controller 37, and actuators 38.

The sensors 30 include object sensors to detect an object around the service vehicle 3 and vehicle sensors to detect various information (a vehicle state) acquirable from the service vehicle 3.

The object sensors detect a surrounding environment of the service vehicle 3, such as relative positions between an object existing around the service vehicle 3 and the service vehicle 3, distance between the service vehicle 3 and the object, and a direction in which the object exists. The object sensors may include, for example, a camera to capture the surrounding environment of the service vehicle 3. In addition, for example, the object sensors may include a ranging device, such as a laser range finder (LRF), a radar, and a laser radar like a light detection and ranging (LiDAR). The object sensors output detected surrounding environment information that is information about the surrounding environment of the service vehicle 3 to the second controller 37.

The vehicle sensors may include, for example, a vehicle speed sensor to detect traveling speed (vehicle speed) of the service vehicle 3, wheel speed sensors to detect rotational speed of tires that the service vehicle 3 includes, a triaxial acceleration sensor (G sensor) to detect acceleration (including deceleration) in three axial directions of the service vehicle 3, a steering angle sensor to detect a steering angle (including a steered angle), a gyro sensor to detect angular velocity generated in the service vehicle 3, and a yaw rate sensor to detect a yaw rate. The vehicle sensors output vehicle state information to the second controller 37.

The positioning device 31 measures a current position and a posture of the service vehicle 3. The positioning device 31 may include, for example, a global navigation satellite system (GNSS) receiver. The GNSS receiver may be, for example, a global positioning system (GPS) receiver. The positioning device 31 may include an inertial navigation device. The positioning device 31 outputs current position information about measured current position to the second controller 37.

The map database 32 stores map information. The map information may include data of a navigation map and high-definition map data (hereinafter, simply referred to as "high-definition map") that are suitable as a map for autonomous driving.

The communication device 33 provides a communication function between the service vehicle 3 and an external device. A communication system used by the communication device 33 may be, for example, wireless communication based on the public mobile communication network, satellite communication, road-to-vehicle communication, or the like. The service vehicle 3 transmits and receives data to and from the vehicle dispatch control device 2, using the communication device 33.

The terminal devices 34 are interface devices that transfer information between a user who is on-board the service vehicle 3 and the second controller 37. For example, the terminal devices 34 include a display device to output visual information output from the second controller 37 and a speaker or a buzzer to output an alarm sound, a notification sound, or voice information.

In addition, for example, the terminal devices 34 include a manipulation element or a voice input device to accept operation input from a user to the second controller 37. The manipulation element may be a mechanical interface device, such as a button, a switch, a lever, a dial, and a keyboard, or a button, a switch, a lever, a dial, or a keyboard that is displayed on a touch panel.

In addition, for example, when the service vehicle 3 is a manually driven vehicle, which is manually driven by a driver, the terminal devices 34 may be used as interface devices that transfer information between the driver and the second controller 37.

The display device 35 is installed on an outer surface (for example, a roof, a front surface, a side surface, and/or a rear surface) of a vehicle body of the service vehicle 3 and displays visual information that the second controller 37 outputs, toward the outside of the service vehicle 3. The display device 35 may be, for example, a display that displays character information or image information that the second controller 37 outputs.

The in-vehicle devices 36 are various types of devices installed in the service vehicle 3. For example, the in-vehicle devices 36 may be an in-vehicle audio device, an air conditioning device, and a lighting device.

The second controller 37 is an electronic control unit (ECU) that controls the service vehicle 3. The second controller 37 includes a processor 37a and a peripheral component, such as a storage device 37b. The processor 37a may be, for example, a CPU or an MPU. The storage device 37b may include a non-transitory tangible storage medium like registers, a cache memory, a memory, such as a ROM or a RAM, that is used as a main storage device, or the like. Functions of the second controller 37, which will be described below, are achieved by, for example, the processor 37a executing computer programs stored in the storage device 37b.

For example, when the service vehicle 3 is an autonomous driving vehicle, the second controller 37 executes, based on the surrounding environment information and the vehicle state information from the sensors 30, a positioning result from the positioning device 31, and the high-definition map in the map database 32, autonomous driving control for causing the service vehicle 3 to travel in accordance with a route information transmitted from the vehicle dispatch control device 2.

The actuators 38 drive the service vehicle 3 in an automated manner by operating a steering device, a drive device, and a braking device of the service vehicle 3 in accordance with a control signal generated by the second controller 37 and thereby generating vehicle behavior of the service vehicle 3. The actuators 38 include a steering actuator, an accelerator opening actuator, and a brake control actuator.

The electronic device 4 is an information processing device that is used by a user of the vehicle dispatch service. The electronic device 4 is, for example, a mobile information terminal that can be carried or a small-sized computer that is portable. The electronic device 4 includes a positioning device 40, a communication device 41, human-machine interfaces (HMIs) 42, and a third controller 43.

The positioning device 40 measures a current position of the electronic device 4 (that is, a current position of the user). The positioning device 40 may include, for example, a GNSS receiver. The GNSS receiver may be, for example, a GPS receiver. The positioning device 40 may include an inertial navigation device. The positioning device 40 outputs current position information of the electronic device 4 to the third controller 43.

The communication device 41 provides a communication function between the electronic device 4 and an external device. A communication system used by the communication device 41 may be, for example, wireless communication based on the public mobile communication network, satellite communication, or the like. The electronic device 4 transmits and receives data to and from the vehicle dispatch control device 2, using the communication device 41.

The HMIs 42 are interface devices that transfer information between the electronic device 4 and the user. The HMIs 42 include a display device that is visually recognizable for the user and a speaker or a buzzer that outputs an alarm sound, a notification sound, or voice information. In addition, the HMIs 42 include a manipulation element or a voice input device that accepts operation input from the user to the electronic device 4. The manipulation element may be a button, a switch, a lever, a dial, a keyboard, a touch panel, or the like.

The third controller 43 is an electronic control unit that controls operation of the electronic device 4. The third controller 43 includes a processor 43a and a peripheral component, such as a storage device 43b. The processor 43a may be, for example, a CPU or an MPU. The storage device 43b may include a non-transitory tangible storage medium like memory registers, a cache memory, a memory, such as a ROM or a RAM, that is used as a main storage device, or the like.

The user may install dedicated application software for using the vehicle dispatch system 1 in the electronic device 4 in advance before reserving a vehicle dispatch service and make a reservation using the dedicated application software. In addition, the user may reserve a vehicle dispatch service at a site on the Internet that accepts a reservation of a vehicle dispatch service, using a browsing function of the electronic device 4.

The electronic device 4 accepts input operation to the HMIs 42 by the user relating to reservation of a vehicle dispatch service. For example, the user inputs required information, such as identification information of the user, a desired pick-up point, a destination (desired drop-off point), and the number of passengers. The third controller 43 generates a vehicle dispatch request to make a reservation for a vehicle dispatch service, based on information input by the user.

The third controller 43 transmits information about a vehicle dispatch request to the vehicle dispatch control device 2, using the communication device 41. The vehicle dispatch control device 2 stores the information about the vehicle dispatch request in the reservation information database 23 as reservation information.

The vehicle dispatch control device 2 selects a service vehicle 3 to be dispatched to the user, based on the reservation information and also calculates, based on a desired pick-up point and a destination of the user, a route along which the service vehicle 3 having picked up the user is to travel to the destination. The vehicle dispatch control device 2 sets, based on the calculated route, a scheduled pick-up point.

The vehicle dispatch control device 2 calculates a scheduled time at which the service vehicle 3 arrives at the scheduled pick-up point as a scheduled meeting time between the user and the service vehicle 3. In addition, the vehicle dispatch control device 2 calculates a time at which the service vehicle 3 arrives at the destination (a scheduled arrival time).

The vehicle dispatch control device 2 transmits information about the scheduled pick-up point and the destination, route information from the scheduled pick-up point to the destination, and information about the scheduled meeting time and the scheduled arrival time to the electronic device 4. The electronic device 4 presents the above-described information by the HMIs 42 to the user.

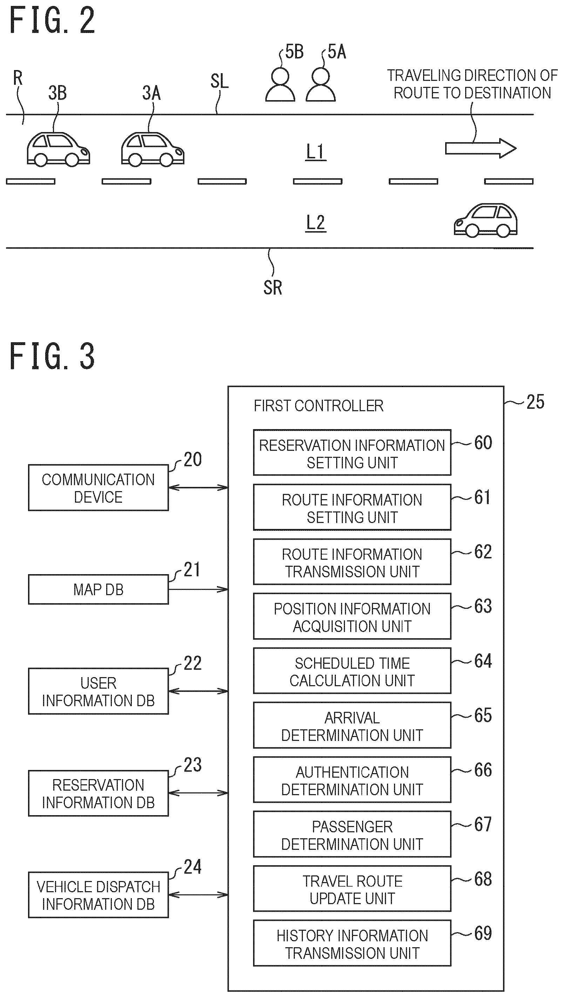

FIG. 2 is a schematic explanatory diagram of a vehicle dispatch method of the present invention. For example, a case is assumed where the vehicle dispatch control device 2 has received a vehicle dispatch request from a user 5A and dispatched the service vehicle 3A to the user 5A. When each of the user 5A and the service vehicle 3A arrives at a scheduled pick-up point, the user 5A performs authentication operation of the vehicle dispatch service. When the authentication succeeds, the service vehicle 3A picks up the user 5A and starts traveling to a destination.

The vehicle dispatch control device 2 in the present embodiment transmits route information relating to a route from the scheduled pick-up point to the destination of the user 5A to the service vehicle 3A in advance at least at a time point before a time point at which the user 5A performs the authentication operation. For example, the vehicle dispatch control device 2 may transmit the route information at a time point before a time point at which the service vehicle 3A arrives at the scheduled pick-up point. In the following description, route information relating to a route from a scheduled pick-up point to a destination of each user is sometimes referred to as "route information for the user".

When the user 5A and the service vehicle 3A are to meet on a road R, transmitting route information to the service vehicle 3A in advance in this way enables one of both sides SL and SR of the road R to be set as a scheduled pick-up point in such a way that a departure direction of the service vehicle 3A immediately after picking up the user 5A and a traveling direction of the route to the destination coincide with each other.

Thus, in the present embodiment, the "scheduled pick-up point" may include a specification of, when a user and a service vehicle 3 are to meet on a road, on which of both sides of the road the user is scheduled to board the service vehicle 3.

In the example in FIG. 2, the traveling direction of the route to the destination of the user 5A is a direction indicated by an arrow, is the same as a travel direction of a lane L1, which is close to the SL side of the road R, and is opposite to a travel direction of a lane L2, which is close to the SR side of the road R.

Therefore, setting the scheduled pick-up point to the SL side of the road R enables the departure direction of the service vehicle 3A immediately after picking up the user 5A to coincide with the traveling direction of the route to the destination of the user 5A. Making the departure direction of the service vehicle 3A immediately after picking up the user 5A to coincide with the traveling direction of the route to the destination of the user 5A in this way enables a useless action, such as a turnaround immediately after departure and occurrence of a detour, to be prevented from occurring.

Next, a case is assumed where an identical scheduled pick-up point is set for service vehicles 3 that are dispatched to a plurality of users, respectively.

In the example in FIG. 2, a case is assumed where a service vehicle that when the user 5A made a vehicle dispatch request, the vehicle dispatch control device 2 initially dispatched to the user 5A is the service vehicle 3A and the vehicle dispatch control device 2 has transmitted route information for the user 5A to the service vehicle 3A in advance.

In addition, a case is assumed where a service vehicle that when a user 5B made a vehicle dispatch request, the vehicle dispatch control device 2 initially dispatched to the user 5B is the service vehicle 3B and the vehicle dispatch control device 2 has transmitted route information for the user 5B to the service vehicle 3B in advance.

In the following description, a service vehicle 3 that is initially dispatched in response to a vehicle dispatch request from a user is sometimes referred to as "scheduled vehicle". In the example in FIG. 2, a scheduled vehicle for the user 5A is the service vehicle 3A, and a scheduled vehicle for the user 5B is the service vehicle 3B.

In this case, when, for example, the service vehicles 3A and 3B arrive at the scheduled pick-up point at the same timing, it is sometimes difficult for the user 5A to determine which service vehicle is the scheduled vehicle 3A for the user 5A. For example, when the service vehicles 3A and 3B are vehicles having the same external appearance, it is sometimes difficult for the user 5A to distinguish the scheduled vehicle 3A. Likewise, it is sometimes difficult for the user 5B to determine which service vehicle is the scheduled vehicle 3B for the user 5B. There is a risk that due to this inconvenience, time required for a user to board a service vehicle 3 increases, which leads to deterioration in service.

In addition, for example, when both users 5A and 5B arrive at the scheduled pick-up point earlier than the service vehicles 3A and 3B arrive at the scheduled pick-up point, it is sometimes difficult for the users 5A and 5B to determine whether each of the service vehicles 3, which have arrived later than the users 5A and 5B, is the scheduled vehicle 3A for the user 5A or the scheduled vehicle 3B for the user 5B.

In addition, for example, when the user 5A and the service vehicle 3B arrive at the scheduled pick-up point earlier than the user 5B and the service vehicle 3A arrive at the scheduled pick-up point, the user 5A is sometimes to mistakenly board the service vehicle 3B. The same applies to a case where the user 5B and the service vehicle 3A arrive at the scheduled pick-up point earlier than the user 5A and the service vehicle 3B arrive at the scheduled pick-up point. In such cases, there is a risk that time required for a user to board a service vehicle 3 increases, which leads to deterioration in service.

Note that a combination of a user and the service vehicle 3A that is initially dispatched to the user is sometimes referred to as "correct combination of a user and a vehicle" or "correct combination". In addition, with respect to such a combination of a user and the service vehicle 3A, it is sometimes referred to as "the combination of the user and the vehicle is correct" or "the combination is correct". For example, a combination of the user 5A and the scheduled vehicle 3A and a combination of the user 5B and the scheduled vehicle 3B are correct combinations.

Therefore, the vehicle dispatch control device 2 of the embodiment determines whether or not scheduled pick-up points of a plurality of users are identical and, when the scheduled pick-up points of the plurality of users are identical, transmits pieces of route information for the plurality of users to all of a plurality of service vehicles before authenticating a user who is to board a service vehicle 3.

Each of the service vehicles 3 selects, after authentication of a user who is to board the service vehicle 3, a piece of route information for the authenticated user from the pieces of route information received from the vehicle dispatch control device 2 and drives the service vehicle 3 itself based on the selected piece of route information.

When the service vehicle 3 is a manually driven vehicle, the service vehicle 3 assists the driver in driving the service vehicle 3 based on the selected piece of route information. For example, the service vehicle 3 presents the selected piece of route information, using a terminal device 34.

Because of this configuration, the user becomes able to board any vehicle among a plurality of service vehicles 3 arriving at the same scheduled pick-up point. Since as a result, the time required to board a service vehicle 3 is reduced, it becomes smoother for a user to board a dispatched service vehicle 3.

Operation and functions of each unit in the vehicle dispatch system 1 of the embodiment will be described below in more detail. FIG. 3 is a block diagram of an example of a functional configuration of the first controller 25 of the vehicle dispatch control device 2. The first controller 25 includes a reservation information setting unit 60, a route information setting unit 61, a route information transmission unit 62, a position information acquisition unit 63, a scheduled time calculation unit 64, an arrival determination unit 65, an authentication determination unit 66, a passenger determination unit 67, a travel route update unit 68, and a history information transmission unit 69.

When the reservation information setting unit 60 receives a vehicle dispatch request from the electronic device 4, using the communication device 20, the reservation information setting unit 60 sets reservation information, based on information about identification information of the user, a desired pick-up point, a destination, the number of passengers, and the like included in the vehicle dispatch request and stores the reservation information in the reservation information database 23.

The route information setting unit 61 selects a service vehicle 3 to be dispatched to the user, based on the reservation information and also calculates, based on the desired pick-up point and the destination of the user, a route along which the service vehicle 3 having picked up the user is to travel to the destination. The route information setting unit 61 sets, based on the calculated route, a scheduled pick-up point.

For example, when the user and the service vehicle 3 are to meet on a road, the route information setting unit 61 may set on which of both sides of the road the scheduled pick-up point is located, based on the destination. For example, the route information setting unit 61 may set one of both sides of the road as the scheduled pick-up point in such a way that the departure direction of the service vehicle immediately after picking up the user and the traveling direction of the route to the destination coincide with each other.

The route information transmission unit 62 transmits route information relating to the route from the scheduled pick-up point to the destination of the user to the service vehicle 3 in advance at a time point before a time point at which the user performs the authentication operation. In addition, the route information transmission unit 62 transmits the route information to the electronic device 4.

In the following description, route information for each user transmitted to a scheduled vehicle for the user is sometimes referred to as "basic route information". In the example in FIG. 2, the route information for the user 5A transmitted to the scheduled vehicle 3A for the user 5A is an example of the "basic route information", and the route information for the user 5B transmitted to the scheduled vehicle 3B for the user 5B is another example of the "basic route information".

The route information transmission unit 62 transmits, to the electronic device 4 of each user, the route information for the user. In addition, the route information transmission unit 62 stores vehicle dispatch information of the dispatched service vehicles 3 in the vehicle dispatch information database 24.

The position information acquisition unit 63 acquires position information of the current positions of the service vehicles 3 received from the service vehicles 3, using the communication device 20. In addition, the position information acquisition unit 63 acquires position information of the current position of the electronic device 4 received from the electronic device 4, using the communication device 20 as position information of the user.

The scheduled time calculation unit 64 calculates a scheduled time at which a service vehicle 3 arrives at a scheduled pick-up point as a scheduled meeting time between a user and the service vehicle 3. In addition, the scheduled time calculation unit 64 calculates a scheduled arrival time at which a service vehicle 3 arrives at a destination. The scheduled time calculation unit 64 transmits information about the scheduled meeting time and the scheduled arrival time to the electronic device 4, using the communication device 20.

The arrival determination unit 65 determines whether or not a plurality of users arrive at an identical scheduled pick-up point within a predetermined time or whether or not a plurality of service vehicles 3 arrive at the identical scheduled pick-up point within the predetermined time. In addition, the arrival determination unit 65 determines whether or not each combination of a user and a service vehicle 3 arriving at the identical scheduled pick-up point within the predetermined time is a correct combination.

The arrival determination unit 65 may estimate when a user and a service vehicle 3 arrive at the scheduled pick-up point, based on, for example, a history of position information of the user and a history of the service vehicle 3. In addition, for example, the arrival determination unit 65 may assume a scheduled meeting time that the scheduled time calculation unit 64 calculates, as a time at which the user and the service vehicle 3 arrive at the scheduled pick-up point.

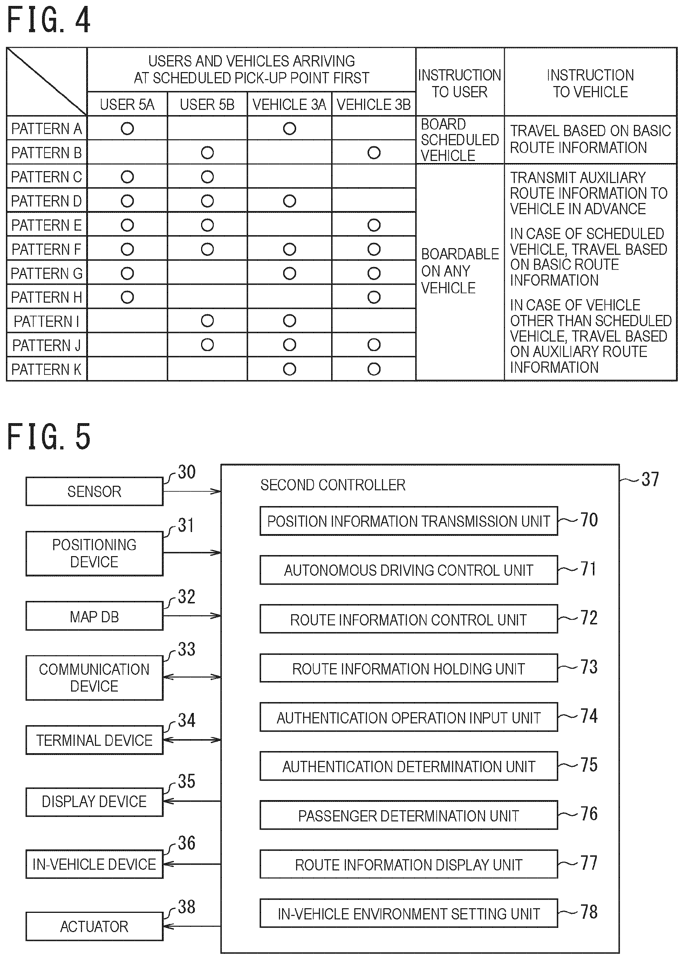

FIG. 4 is an explanatory diagram of an example of patterns of arrival timing at which users and service vehicles 3 arrive at a scheduled pick-up point. Although herein, as an illustrative example, an example of two combinations including a combination of the user 5A and the service vehicle 3A and a combination of the user 5B and the service vehicle 3B is described, the number of combinations of a user and a service vehicle 3 arriving at an identical scheduled pick-up point is not limited to two and whether or not three or more combinations of a user and a service vehicle 3 arrive at the identical scheduled pick-up point may be determined.

In a pattern A, the combination (correct combination) of the user 5A and the service vehicle 3A (scheduled vehicle for the user 5A) arrives at the scheduled pick-up point first, and subsequently the combination (correct combination) of the user 5B and the service vehicle 3B (scheduled vehicle for the user 5B) arrives at the scheduled pick-up point first.

In a pattern B, the combination (correct combination) of the user 5B and the service vehicle 3B arrives at the scheduled pick-up point first, and subsequently the combination (correct combination) of the user 5A and the service vehicle 3A arrives at the scheduled pick-up point.

In the patterns A and B, the arrival determination unit 65 does not determine that a plurality of users or a plurality of service vehicles 3 arrive at the identical scheduled pick-up point within the predetermined time. In addition, the arrival determination unit 65 does not determine that an incorrect combination of a user and a service vehicle 3 arrives at the identical scheduled pick-up point within the predetermined time.

In a pattern C, the users 5A and 5B arrive at the scheduled pick-up point first, and subsequently the service vehicles 3A and 3B arrive at the scheduled pick-up point. Thus, the arrival determination unit 65 determines that a plurality of users arrive at the identical scheduled pick-up point within the predetermined time.

In a pattern D, the users 5A and 5B and the service vehicle 3A arrive at the scheduled pick-up point first, and subsequently the service vehicle 3B arrives at the scheduled pick-up point. Thus, the arrival determination unit 65 determines that a plurality of users arrive at the identical scheduled pick-up point within the predetermined time. In addition, the arrival determination unit 65 determines that an incorrect combination of the user 5B and the service vehicle 3A arrives at the identical scheduled pick-up point within the predetermined time.

In a pattern E, the users 5A and 5B and the service vehicle 3B arrive at the scheduled pick-up point first, and subsequently the service vehicle 3A arrives at the scheduled pick-up point. Thus, the arrival determination unit 65 determines that a plurality of users arrive at the identical scheduled pick-up point within the predetermined time. In addition, the arrival determination unit 65 determines that an incorrect combination of the user 5A and the service vehicle 3B arrives at the identical scheduled pick-up point within the predetermined time.

In a pattern F, the users 5A and 5B and the service vehicles 3A and 3B arrive at the scheduled pick-up point at approximately the same time. Thus, the arrival determination unit 65 determines that a plurality of users arrive at the identical scheduled pick-up point within the predetermined time. In addition, the arrival determination unit 65 determines that a plurality of service vehicles 3 arrive at the identical scheduled pick-up point within the predetermined time. In addition, the arrival determination unit 65 determines that the incorrect combination of the user 5A and the service vehicle 3B and the incorrect combination of the user 5B and the service vehicle 3A arrive at the identical scheduled pick-up point within the predetermined time.

In a pattern G, the user 5A and the service vehicles 3A and 3B arrive at the scheduled pick-up point first, and subsequently the user 5B arrives at the scheduled pick-up point. Thus, the arrival determination unit 65 determines that a plurality of service vehicles 3 arrive at the identical scheduled pick-up point within the predetermined time. In addition, the arrival determination unit 65 determines that the incorrect combination of the user 5A and the service vehicle 3B arrives at the identical scheduled pick-up point within the predetermined time.

In a pattern H, the user 5A and the service vehicle 3B arrive at the scheduled pick-up point first, and subsequently the user 5B and the service vehicle 3A arrive at the scheduled pick-up point. Thus, the arrival determination unit 65 determines that the incorrect combination of the user 5A and the service vehicle 3B arrives at the identical scheduled pick-up point within the predetermined time.

In a pattern I, the user 5B and the service vehicle 3A arrive at the scheduled pick-up point first, and subsequently the user 5A and the service vehicle 3B arrive at the scheduled pick-up point. Thus, the arrival determination unit 65 determines that the incorrect combination of the user 5B and the service vehicle 3A arrives at the identical scheduled pick-up point within the predetermined time.

In a pattern J, the user 5B and the service vehicles 3A and 3B arrive at the scheduled pick-up point first, and subsequently the user 5A arrives at the scheduled pick-up point. Thus, the arrival determination unit 65 determines that a plurality of service vehicles 3 arrive at the identical scheduled pick-up point within the predetermined time. In addition, the arrival determination unit 65 determines that the incorrect combination of the user 5B and the service vehicle 3A arrives at the identical scheduled pick-up point within the predetermined time.

In a pattern K, the service vehicles 3A and 3B arrive at the scheduled pick-up point first, and subsequently the users 5A and 5B arrive at the scheduled pick-up point. Thus, the arrival determination unit 65 determines that a plurality of service vehicles 3 arrive at the identical scheduled pick-up point within the predetermined time.

FIG. 3 is now referred to. When the arrival determination unit 65 determines that a plurality of users arrive at an identical scheduled pick-up point, the route information transmission unit 62 transmits, to all of scheduled vehicles each of which is dispatched to one of the plurality of users arriving at the identical scheduled pick-up point, route information for all the other users.

For example, when the arrival determination unit 65 determines that a plurality of users arrive at the identical scheduled pick-up point within the predetermined time, the route information transmission unit 62 may transmit, to all of scheduled vehicles each of which is dispatched to one of the plurality of users arriving at the identical scheduled pick-up point, route information for all the other users.

Route information for another user to be transmitted to a scheduled vehicle dispatched to one of the plurality of users arriving at the identical scheduled pick-up point in this way is sometimes referred to as "auxiliary route information" in the following description.

In addition, when to a scheduled vehicle dispatched to a user among a plurality of users arriving at the identical scheduled pick-up point, route information for another user thereamong is transmitted as auxiliary route information, the other user is sometimes referred to as "user corresponding to the auxiliary route information".

Likewise, when the arrival determination unit 65 determines that a plurality of service vehicles 3 arrive at the identical scheduled pick-up point within the predetermined time and when the arrival determination unit 65 determines that an incorrect combination of a user and a service vehicle 3 arrives at the identical scheduled pick-up point within the predetermined time, the route information transmission unit 62 also transmits auxiliary route information.

Thus, in the cases of, for example, the patterns C to K illustrated in FIG. 4, the route information transmission unit 62 transmits auxiliary route information to the service vehicles 3 in advance.

For example, when users arriving at the identical scheduled pick-up point are two users, specifically the users 5A and 5B, the route information transmission unit 62 transmits the route information for the user 5A to the service vehicle 3B that is a scheduled vehicle dispatched to the user 5B and transmits the route information for the user 5B to the service vehicle 3A that is a scheduled vehicle dispatched to the user 5A, as auxiliary route information.

When users arriving at the identical scheduled pick-up point are three users, specifically the users 5A to 5C, the route information transmission unit 62 transmits the route information for the user 5A to the service vehicles 3B and 3C that are scheduled vehicles dispatched to the users 5B and 5C, respectively, transmits the route information for the user 5B to the service vehicles 3A and 3C that are scheduled vehicles dispatched to the users 5A and 5C, respectively, and transmits the route information for the user 5C to the service vehicles 3A and 3B that are scheduled vehicles dispatched to the users 5A and 5B, respectively, as auxiliary route information. The same applies to a case where the number of users arriving at the identical scheduled pick-up point is four or more.

When the route information transmission unit 62 transmits route information for a user as auxiliary route information, the route information transmission unit 62 may notify the user that the user can board any vehicle as long as the vehicle is a service vehicle 3 arriving at the scheduled pick-up point. For example, the route information transmission unit 62 may transmit information about such notification to the electronic device 4. The electronic device 4 may display the received information on an HMI 42.

On the other hand, when the route information transmission unit 62 does not transmit auxiliary route information, the route information transmission unit 62 may notify the user to board a service vehicle 3 that is the scheduled vehicle. For example, the route information transmission unit 62 may transmit information identifying the scheduled vehicle (for example, a number or a symbol inscribed on a vehicle body of the service vehicle 3 or a license plate) to the electronic device 4. The electronic device 4 may display the received information on an HMI 42.

Thus, in the case of, for example, the patterns A and B illustrated in FIG. 4, the route information transmission unit 62 notifies each user to board the scheduled vehicle. In addition, in the case of the patterns C to K, the route information transmission unit 62 notifies each user that the user can board any of the service vehicles.

When each of a user and a service vehicle 3 arrives at the scheduled pick-up point, the user performs authentication operation to board the service vehicle 3. For example, the user may input the authentication operation to the electronic device 4 that the user carries. In addition, for example, the user inputs the authentication operation to a terminal device 34 of the service vehicle 3. When the authentication operation is performed by the user, the authentication determination unit 66 determines success or failure of the authentication of the user.

For example, when the authentication operation is input to the electronic device 4, the authentication determination unit 66 determines whether or not the user is positioned within a range of a predetermined distance from the scheduled vehicle, based on position information of the user and position information of the service vehicle 3. When the user is positioned within a range of a predetermined distance from the scheduled vehicle and the authentication information is proper, the authentication determination unit 66 may determine that the authentication of the user has succeeded. In addition, for example, when the authentication operation is input to a terminal device 34 of the scheduled vehicle dispatched to the user, the authentication determination unit 66 may determine that the authentication of the user has succeeded depending on whether or not the authentication information is proper.

In addition, even when a service vehicle 3 with respect to which the authentication of the user is performed is not the scheduled vehicle, the authentication determination unit 66 may determine success or failure of the authentication in a similar manner to the case where the service vehicle 3 is the scheduled vehicle as long as the service vehicle 3 is a service vehicle 3 that has received route information for the user as auxiliary route information. Note that when a service vehicle 3 with respect to which the authentication of the user is performed is neither the scheduled vehicle nor a service vehicle 3 that has received route information for the user as auxiliary route information, the authentication determination unit 66 determines that the authentication of the user does not succeed.

When the authentication of the user by the authentication determination unit 66 succeeds, the passenger determination unit 67 determines the user having boarded the service vehicle 3, based on the authentication result. As described later, the service vehicle 3 may determine success or failure of the authentication of the user. In this case, the first controller 25 may receive identification information of the user having boarded the service vehicle 3 from the service vehicle 3.

The travel route update unit 68 determines whether or not a combination of a user having boarded a service vehicle 3 and the service vehicle 3 is a correct combination. That is, the travel route update unit 68 determines whether or not the user has boarded the scheduled vehicle.

When the travel route update unit 68 determines that the combination of the user and the service vehicle 3 is correct, the travel route update unit 68 transmits a first instruction signal instructing the service vehicle 3 to depart and travel based on the basic route information, to the service vehicle 3.

Thus, in the case of the patterns A and B illustrated in FIG. 4, the travel route update unit 68 transmits the first instruction signal instructing the service vehicle 3 to travel based on the basic route information, to the service vehicle 3. In addition, when the user has boarded the scheduled vehicle in the patterns C to K, the travel route update unit 68 transmits the first instruction signal to the service vehicle 3.

When the travel route update unit 68 does not determine that the combination of the user and the service vehicle 3 is correct, the travel route update unit 68 selects, from pieces of auxiliary route information, route information for the user having boarded the service vehicle 3 as updated route information. The travel route update unit 68 transmits a second instruction signal instructing the service vehicle 3 to depart and travel based on the updated route information, to the service vehicle 3.

Thus, when the user boarded a vehicle other than the scheduled vehicle in the patterns C to K illustrated in FIG. 4, the travel route update unit 68 transmits the second instruction signal instructing the service vehicle 3 to travel based on the auxiliary route information, to the service vehicle 3.

The history information transmission unit 69 acquires history information of the user determined by the passenger determination unit 67 from the user information database 23. The history information transmission unit 69 transmits history information about an in-vehicle environment of the service vehicle 3 when the user boarded the service vehicle 3 in the past, to the service vehicle 3.

FIG. 5 is a block diagram of an example of a functional configuration of the second controller 37 of a service vehicle 3. The second controller 37 includes a position information transmission unit 70, an autonomous driving control unit 71, a route information control unit 72, a route information holding unit 73, an authentication operation input unit 74, an authentication determination unit 75, a passenger determination unit 76, a route information display unit 77, and an in-vehicle environment setting unit 78.

The position information transmission unit 70 acquires position information of the service vehicle 3 from the positioning device 31. The position information transmission unit 70 transmits the position information to the vehicle dispatch control device 2, using the communication device 33.

The autonomous driving control unit 71 executes autonomous driving control for causing the service vehicle 3 to travel in accordance with route information transmitted from the vehicle dispatch control device 2. For example, the autonomous driving control unit 71 calculates a target travel trajectory on which the service vehicle 3 is caused to travel, based on the current position and posture of the service vehicle 3, the route information, the high-definition map, and the surrounding environment of the service vehicle 3. For example, the autonomous driving control unit 71 generates a route space map that represents routes and existence or nonexistence of an object around the service vehicle 3 and a risk map that is generated by quantifying a degree of risk during traveling and generates a target travel trajectory, based on motion characteristics of the service vehicle 3, the vehicle state information, the route space map, and the risk map. The autonomous driving control unit 71 drives the actuators 38 in such a way that the service vehicle 3 travels along the generated target travel trajectory.

When the route information control unit 72 receives basic route information from the vehicle dispatch control device 2, using the communication device 33, the route information control unit 72 stores the basic route information in the route information holding unit 73. When the route information control unit 72 receives auxiliary route information from the vehicle dispatch control device 2, using the communication device 33, the route information control unit 72 stores the auxiliary route information in the route information holding unit 73.

In addition, when the route information control unit 72 receives route information for a user as auxiliary route information, the route information control unit 72 may notify the user (that is, the user corresponding to the auxiliary route information) that the user can also board the service vehicle 3. That is, the route information control unit 72 may notify the user corresponding to the auxiliary route information that the user can board a service vehicle 3 other than the scheduled vehicle for the user.

Because of this configuration, each of a plurality of users arriving at the identical scheduled pick-up point can determine that the user can board any service vehicle 3 arriving at the scheduled pick-up point.

For example, the route information control unit 72 may display that in addition to a user to whom the service vehicle 3 is initially dispatched (a user to whom the service vehicle 3 has been dispatched as a scheduled vehicle), a user corresponding to the auxiliary route information can also board the service vehicle 3, using the display device 35, which is installed on the outer surface of the vehicle body of the service vehicle 3. For example, the route information control unit 72 may display information by which such users who can board the service vehicle 3 can be identified (for example, an acceptance number of a vehicle dispatch request) on the display device 35.

The authentication operation input unit 74 accepts authentication operation performed by a user when the user inputs the authentication operation by operating a terminal device 34.

The authentication determination unit 75 and the passenger determination unit 76 are implemented for a case where authentication processing of a user who has input authentication operation using the terminal device 34 is performed by the service vehicle 3. When the authentication processing is not performed by the service vehicle 3, the authentication determination unit 75 and the passenger determination unit 76 may be omitted.

The authentication determination unit 75 determines success or failure of the authentication of the user when authentication operation is input using the terminal device 34. For example, when the user performs the authentication operation in the scheduled vehicle and the authentication information is proper, the authentication determination unit 75 may determine that the authentication of the user has succeeded.

In addition, even when the service vehicle 3 that performs the authentication of the user is not the scheduled vehicle, the authentication determination unit 75 may determine success or failure of the authentication in a similar manner to the case where the service vehicle 3 is the scheduled vehicle as long as the service vehicle 3 is a service vehicle 3 that has received route information for the user as auxiliary route information.

When the authentication processing of a user is performed by the service vehicle 3, the vehicle dispatch control device 2 may transmit, in addition to the basic route information and the auxiliary route information, identification information of a user corresponding to the route information to the service vehicle 3.

When the authentication of the user by the authentication determination unit 75 succeeds, the passenger determination unit 76 determines the user having boarded the service vehicle 3, based on the authentication result. The passenger determination unit 76 transmits identification information of the user having boarded the service vehicle 3 to the vehicle dispatch control device 2.

The route information display unit 77 displays the route information and the destination transmitted from the vehicle dispatch control device 2 to the user having boarded the service vehicle 3. For example, the route information display unit 77 may display the route information and the destination on a terminal device 34.

When the service vehicle 3 receives a first instruction signal instructing the service vehicle 3 to travel based on the basic route information from the vehicle dispatch control device 2, the route information display unit 77 displays the basic route information and the destination thereof to the user.

On the other hand, when the service vehicle 3 receives a second instruction signal instructing the service vehicle 3 to travel based on the updated route information from the vehicle dispatch control device 2, the route information display unit 77 displays auxiliary route information selected as the updated route information and the destination thereof to the user. Therefore, even when the service vehicle 3 that the user boarded is not the scheduled vehicle, the route information display unit 77 can display the destination and the route information for the user.

In addition, when the service vehicle 3 receives the first instruction signal from the vehicle dispatch control device 2, the route information control unit 72 sets the basic route information as a target travel route of the service vehicle 3. In addition, when the service vehicle 3 receives the second instruction signal from the vehicle dispatch control device 2, the route information control unit 72 sets auxiliary route information selected as the updated route information as a target travel route. The autonomous driving control unit 71 executes the autonomous driving control for causing the service vehicle 3 to travel along the target travel route set by the route information control unit 72. Because of this configuration, the autonomous driving control unit 71 causes the service vehicle 3 to travel to the destination in accordance with the basic route information when the service vehicle 3 receives the first instruction signal from the vehicle dispatch control device 2 and causes the service vehicle 3 to travel to the destination in accordance with auxiliary route information selected as the updated route information when the service vehicle 3 receives the second instruction signal from the vehicle dispatch control device 2.

The in-vehicle environment setting unit 78 receives history information of the user having boarded the service vehicle 3 from the vehicle dispatch control device 2. The history information includes history information about the in-vehicle environment of the service vehicle 3 when the user boarded the service vehicle 3 in the past. The in-vehicle environment setting unit 78 sets the in-vehicle environment of the service vehicle 3, based on the received history information about the in-vehicle environment. For example, the in-vehicle environment setting unit 78 controls operation of the in-vehicle devices 36, based on the received history information about the in-vehicle environment.

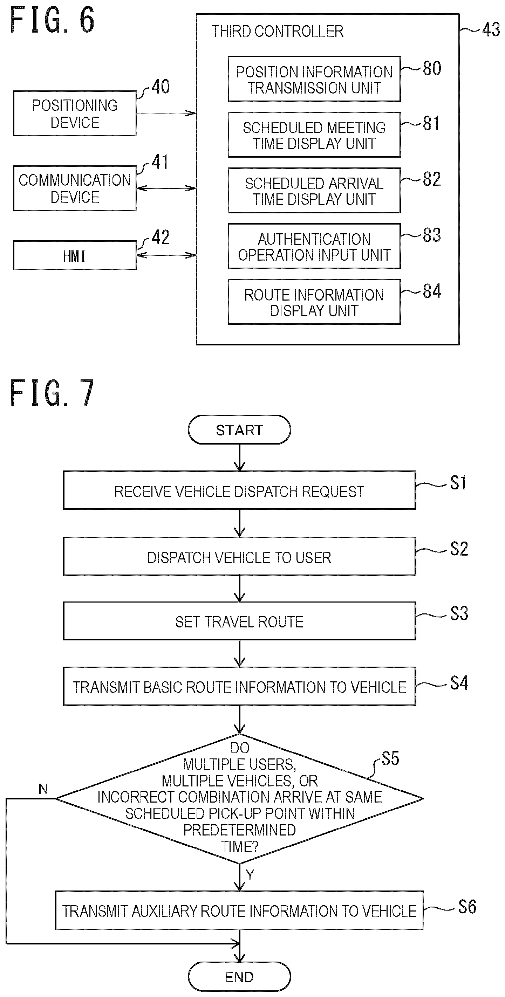

FIG. 6 is a block diagram of an example of a functional configuration of the third controller 43 of the electronic device 4. The third controller 43 includes a position information transmission unit 80, a scheduled meeting time display unit 81, a scheduled arrival time display unit 82, an authentication operation input unit 83, and a route information display unit 84.

The position information transmission unit 80 acquires position information of the electronic device 4 from the positioning device 40. The position information transmission unit 80 transmits the acquired position information to the vehicle dispatch control device 2 as the position information of the user, using the communication device 41.

The scheduled meeting time display unit 81 displays a scheduled meeting time received from the vehicle dispatch control device 2 on an HMI 42. The scheduled arrival time display unit 82 displays a scheduled arrival time received from the vehicle dispatch control device 2 on an HMI 42.

The authentication operation input unit 83 accepts authentication operation performed by the user when the user inputs the authentication operation to the electronic device 4 (for example, when the user inputs the authentication operation by operating an HMI 42). The authentication operation input unit 83 transmits the input authentication information to the vehicle dispatch control device 2, using the communication device 41.

The route information display unit 84 displays route information and a destination thereof received from the vehicle dispatch control device 2 on an HMI 42.

### (Operation)

FIG. 7 is a flowchart of an example of processing performed by the vehicle dispatch system 1 at the time of vehicle dispatch.

In step S1, the reservation information setting unit 60 receives a vehicle dispatch request.

In step S2, the route information setting unit 61 dispatches a service vehicle 3 to a user.

In step S3, the route information setting unit 61 calculates a route along which the service vehicle 3 having picked up the user travels to a destination.

In step S4, the route information transmission unit 62 transmits basic route information to a service vehicle 3 that serves as a scheduled vehicle dispatched to the user.

In step S5, the arrival determination unit 65 determines whether or not a plurality of users arrive at an identical scheduled pick-up point within a predetermined time, whether or not a plurality of service vehicles 3 arrive at the identical scheduled pick-up point within the predetermined time, or whether or not an incorrect combination of a user and a service vehicle 3 arrives at the identical scheduled pick-up point within the predetermined time.

When a plurality of users arrive at the identical scheduled pick-up point within the predetermined time, a plurality of service vehicles 3 arrive at the identical scheduled pick-up point within the predetermined time, or an incorrect combination of a user and a service vehicle 3 arrives at the identical scheduled pick-up point within the predetermined time (step S5: Y), the process proceeds to step S6. When none of the foregoing conditions is satisfied (step S5: N), the service vehicle 3 is to meet the user at the scheduled pick-up point included in the basic route information and, after picking up the user, travels to the destination.

In step S6, the route information transmission unit 62 transmits auxiliary route information to each of service vehicles 3 that have been dispatched to a plurality of users arriving at the identical scheduled pick-up point. Subsequently, the process terminates.

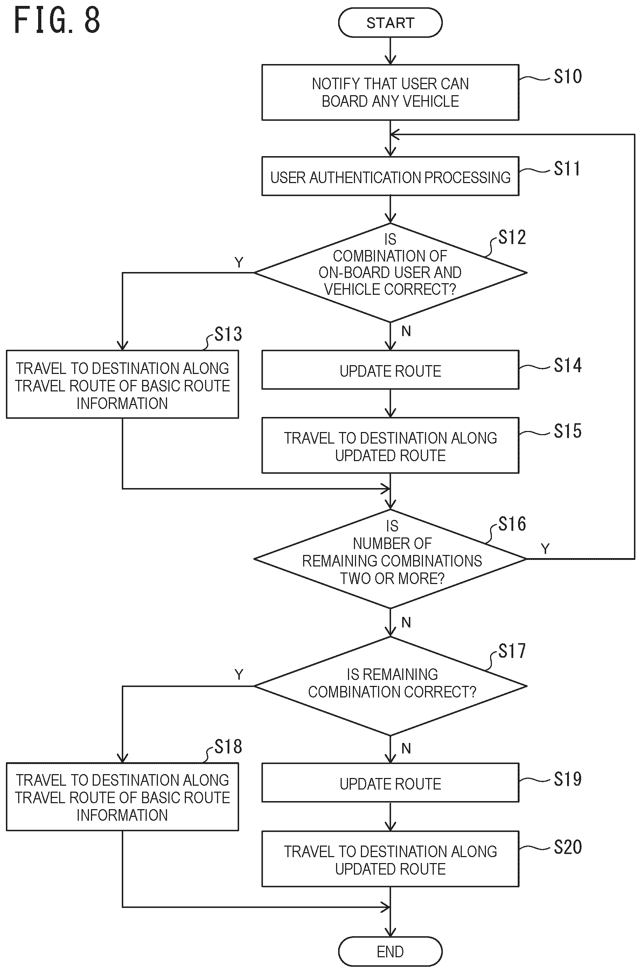

FIG. 8 is a flowchart of an example of processing performed by the vehicle dispatch system 1 after transmitting auxiliary route information.

In step S10, the route information transmission unit 62 of the vehicle dispatch control device 2 notifies the plurality of users arriving at the identical scheduled pick-up point that the users can board any vehicle as long as the vehicle is a service vehicle 3 arriving at the scheduled pick-up point. In addition, the route information control unit 72 of the service vehicle 3 displays that even when the user is a user other than a user to whom the service vehicle 3 is initially dispatched, the user can board any service vehicle 3 arriving at the scheduled pick-up point, on the display device 35.

In step S11, the authentication determination unit 66 of the vehicle dispatch control device 2 or the authentication determination unit 75 of the service vehicle 3 performs authentication processing of the user.

In step S12, the travel route update unit 68 determines whether or not a combination of the user for whom the authentication processing is performed and the service vehicle 3 is correct. When the combination is correct (step S12: Y), the process proceeds to step S13. When the combination is not correct (step S12: N), the process proceeds to step S14.

In step S13, the autonomous driving control unit 71 causes the service vehicle 3 to travel to the destination in accordance with the basic route information. Subsequently, the process proceeds to step S16.

In step S14, the route information control unit 72 updates a target travel route of the service vehicle 3 from a route included in the basic route information to a route included in the auxiliary route information.

In step S15, the autonomous driving control unit 71 causes the service vehicle 3 to travel to the destination in accordance with the auxiliary route information.

In step S16, the travel route update unit 68 determines whether or not two or more combinations of a user for whom the authentication processing has not been performed and a service vehicle remain. When two or more combinations of a user for whom the authentication processing has not been performed and a service vehicle remain (step S16: Y), the process returns to step S11. When the number of combinations of a user for whom the authentication processing has not been performed and a service vehicle is one (step S16: N), the process proceeds to step S17.

In step S17, the travel route update unit 68 determines whether or not the remaining combination is correct. When the combination is correct (step S17: Y), the process proceeds to step S18. When the combination is not correct (step S17: N), the process proceeds to step S19.

In step S18, the autonomous driving control unit 71 causes the service vehicle 3 to travel to the destination in accordance with the basic route information. Subsequently, the process terminates.

In step S19, the route information control unit 72 updates the target travel route of the service vehicle 3 from the route included in the basic route information to the route included in the auxiliary route information.

In step S20, the autonomous driving control unit 71 causes the service vehicle 3 to travel to the destination in accordance with the auxiliary route information. Subsequently, the process terminates.

### (Variations)

(1) The route information transmission unit 62 may transmit only information about a destination of a user as auxiliary route information to a service vehicle 3. The route information control unit 72 of the service vehicle 3 may calculate a route from a scheduled pick-up point included in the basic route information to a destination included in the auxiliary route information. For example, the route information control unit 72 may calculate a route to a destination of a user boarding the service vehicle 3 after authentication of the user. For example, when the service vehicle 3 receives a second instruction signal, the route information control unit 72 may calculate a route to a destination included in auxiliary route information selected as updated route information.
   Likewise, the route information transmission unit 62 may transmit information including only a scheduled pick-up point and a destination as basic route information. The route information control unit 72 may calculate a route to a destination of a user boarding a service vehicle 3 that is a scheduled vehicle after authentication of the user. For example, when the service vehicle 3 receives a first instruction signal, the route information control unit 72 may calculate a route to a destination included in the basic route information.
(2) The route information transmission unit 62 may transmit, as auxiliary route information, only information about a route in an overlapping section that is a section where travel routes to destinations of respective ones of a plurality of users arriving at the identical scheduled pick-up point overlap one another and a destination of a user to a service vehicle 3. The route information control unit 72 of the service vehicle 3 may calculate a route from a terminal point of the overlapping section to the destination included in the auxiliary route information. For example, the route information control unit 72 may calculate a route from the terminal point of the overlapping section to a destination of a user boarding the service vehicle 3 after authentication of the user. For example, when the service vehicle 3 receives a second instruction signal, the route information control unit 72 may calculate a route from the terminal point of the overlapping section to a destination included in auxiliary route information selected as updated route information.

Likewise, the route information transmission unit 62 may calculate information about a route in the overlapping section and a route to a destination as basic route information. The route information control unit 72 may calculate a route from the terminal point of the overlapping section to a destination of a user boarding a service vehicle 3 that is a scheduled vehicle after authentication of the user. For example, when the service vehicle 3 receives a first instruction signal, the route information control unit 72 may calculate a route to a destination included in the basic route information.

### (Advantageous Effects of Embodiment)

(1) A vehicle dispatch system 1 includes a service vehicle 3 provided for use in provision of a transportation service of a user and a vehicle dispatch control device 2 configured to dispatch the service vehicle 3 to the user.

The vehicle dispatch control device 2 includes a first controller 25 configured to execute processing including: acquiring information about destinations of a plurality of the users; dispatching each of a plurality of service vehicles 3 to one of the plurality of users; setting, for each of the plurality of users, route information relating to a route from a scheduled pick-up point to the destination of the user; determining whether or not scheduled pick-up points of the plurality of users are identical; and transmitting, when scheduled pick-up points of the plurality of users are identical, pieces of route information for the plurality of users to all of the plurality of service vehicles 3 before authenticating a user boarding the service vehicle 3.

Each service vehicle 3 includes a second controller 37 configured to execute processing including: selecting, after authentication of the user boarding the service vehicle 3, a piece of route information for the authenticated user from pieces of route information received from the vehicle dispatch control device 2; and driving the service vehicle 3 based on the selected piece of route information or assisting driving of the service vehicle 3 based on the selected piece of route information.

Because of this configuration, the user becomes able to board any service vehicle 3 among service vehicles 3 arriving at the same scheduled pick-up point. Since as a result, the time required to board a service vehicle 3 is reduced, it becomes smoother for a user to board a dispatched service vehicle 3.

(2) The route information may include information about the destination of the user. The second controller 37 may calculate, after authentication of the user boarding the service vehicle 3, a travel route to the destination included in the route information.

Since because of this configuration, the amount of information of route information that is transmitted to and held by the service vehicle 3 can be reduced, it is possible to economize communication volume and memory.

(3) The route information may include a route in an overlapping section, the overlapping section being a section where travel routes from the scheduled pick-up point to destinations of respective ones of the plurality of users overlap one another. The second controller 37 may calculate, after authentication of the user boarding the service vehicle 3, a travel route from a terminal point of the overlapping section to a destination of the user boarding the service vehicle 3.

Since because of this configuration, the amount of information of route information that is transmitted to and held by the service vehicle 3 can be reduced, it is possible to economize communication volume and memory.

(4) The first controller 25 determines whether or not arrival times at which the plurality of users arrive at an identical scheduled pick-up point fall within a predetermined time and, when the arrival times are determined to fall within a predetermined time, transmits pieces of route information for the plurality of users to all of the plurality of service vehicles 3.

Because of this configuration, each of the users arriving at the identical scheduled pick-up point within the predetermined time becomes able to board any service vehicle 3 arriving at the scheduled pick-up point. Since as a result, the time required to board a service vehicle 3 is reduced, it becomes smoother for a user to board a dispatched service vehicle 3.

(5) The service vehicle 3 may be an autonomous driving vehicle. According to the present invention, even when the service vehicles 3 are driverless vehicles such as an autonomous driving vehicle, it is possible to prevent a user from getting lost in determining which service vehicle the user is to board.

(6) The first controller 25 or the second controller 37 may notify that one user of the plurality of users can board the service vehicle 3 dispatched to another user other than the one user among the plurality of users, to the one user.

Because of this configuration, it is possible to notify a user that the user can board any service vehicle 3 arriving at the scheduled pick-up point.

(7) The first controller 25 may set, based on the destination, on which of both sides of a road the scheduled pick-up point is located.

Because of this configuration, it is possible to prevent a useless action, such as causing a service vehicle 3 to turn around immediately after picking up a user and causing a service vehicle 3 to detour, from occurring.

(8) The vehicle dispatch control device 2 may include a storage device configured to store history information about an in-vehicle environment having been set when the user used the service vehicle 3 in a past. The second controller 37 may receive history information of the authenticated user from the vehicle dispatch control device 2 and set an in-vehicle environment of the service vehicle 3 boarded by the user, based on the history information.

Because of this configuration, it is possible to set an in-vehicle environment of a service vehicle 3 in accordance with preference of a user having actually boarded the service vehicle 3.

### Reference Signs List

1 Vehicle dispatch system
2 Vehicle dispatch control device
3, 3A, 3B Service vehicle
4 Electronic device
20, 33, 41 Communication device
21, 32 Map database
22 User information database
23 Reservation information database
24 Vehicle dispatch information database
25 First controller
25a, 37a, 43a Processor
25b, 37b, 43b Storage device
30 Sensor
31 Positioning device
34 Terminal device
35 Display device
36 In-vehicle device
37 Second controller
38 Actuator
40 Positioning device
42 Human-machine interface
43 Third controller
60 Reservation information setting unit
61 Route information setting unit
62 Route information transmission unit
63 Position information acquisition unit
64 Scheduled time calculation unit
65 Arrival determination unit
66 Authentication determination unit
67 Passenger determination unit
68 Travel route update unit
69 History information transmission unit
70 Position information transmission unit
71 Autonomous driving control unit
72 Route information control unit
73 Route information holding unit
74 Authentication operation input unit
75 Authentication determination unit
76 Passenger determination unit
77 Route information display unit
78 In-vehicle environment setting unit
80 Position information transmission unit
81 Scheduled time display unit
82 Scheduled arrival time display unit
83 Authentication operation input unit
84 Route information display unit

## Claims

1. A vehicle dispatch system comprising: a vehicle provided for use in provision of a transportation service of a user; and a vehicle dispatch control device configured to dispatch the vehicle to the user,
wherein the vehicle dispatch control device includes
a first controller configured to execute processing including:
acquiring information about destinations of a plurality of the users;
dispatching each of a plurality of the vehicles to one of the plurality of users;
setting, for each of the plurality of users, route information relating to a route from a scheduled pick-up point to the destination of the user;
determining whether or not scheduled pick-up points of the plurality of users are identical; and
transmitting, when scheduled pick-up points of the plurality of users are identical, pieces of route information for the plurality of users to all of the plurality of vehicles before authenticating a user boarding the vehicle, and
the vehicle includes
a second controller configured to execute processing including:
selecting, after authentication of the user boarding the vehicle, a piece of route information for the authenticated user from pieces of route information received from the vehicle dispatch control device; and
driving the vehicle based on the selected piece of route information or assisting driving of the vehicle based on the selected piece route information.

2. The vehicle dispatch system according to claim 1, wherein
the route information includes information about the destination of the user, and
the second controller calculates, after authentication of the user boarding the vehicle, a travel route to the destination included in the route information.

3. The vehicle dispatch system according to claim 1, wherein
the route information includes a route in an overlapping section, the overlapping section being a section where travel routes from the scheduled pick-up point to destinations of respective ones of the plurality of users overlap one another, and
the second controller calculates, after authentication of the user boarding the vehicle, a travel route from a terminal point of the overlapping section to a destination of the user boarding the vehicle.

4. The vehicle dispatch system according to claim 1, wherein the first controller determines whether or not arrival times at which the plurality of users arrive at an identical scheduled pick-up point fall within a predetermined time and, when the arrival times are determined to fall within a predetermined time, transmits pieces of route information for the plurality of users to all of the plurality of vehicles.

5. The vehicle dispatch system according to claim 1, wherein the vehicle is an autonomous driving vehicle.

6. The vehicle dispatch system according to claim 1, wherein the first controller or the second controller notifies that one user of the plurality of users can board the vehicle dispatched to another user other than the one user among the plurality of users, to the one user.

7. The vehicle dispatch system according to claim 1, wherein the first controller sets, based on the destination, on which of both sides of a road the scheduled pick-up point is located.

8. The vehicle dispatch system according to claim 1, wherein
the vehicle dispatch control device includes a storage device configured to store history information about an in-vehicle environment having been set when the user used the vehicle in a past, and
the second controller receives history information of the authenticated user from the vehicle dispatch control device and sets an in-vehicle environment of the vehicle boarded by the user, based on the history information.

9. A vehicle dispatch control device configured to dispatch a vehicle provided for use in provision of a transportation service of a user, the vehicle dispatch control device comprising
a controller configured to execute processing including:
acquiring information about destinations of a plurality of the users;
dispatching each of a plurality of the vehicles to one of the plurality of users;
setting, for each of the plurality of users, route information including at least information about the destination;
determining whether or not scheduled pick-up points of the plurality of users are identical; and
transmitting, when scheduled pick-up points of the plurality of users are identical, pieces of route information for the plurality of users to all of the plurality of vehicles before authenticating a user boarding the vehicle.

10. A vehicle dispatch method for dispatching a vehicle provided for use in provision of a transportation service of a user to the user, the vehicle dispatch method causing at least one controller to execute processing comprising:
acquiring information about destinations of a plurality of the users;
dispatching each of a plurality of the vehicles to one of the plurality of users;
setting, for each of the plurality of users, route information relating to a route from a scheduled pick-up point to the destination of the user;
determining whether or not scheduled pick-up points of the plurality of users are identical;
transmitting, when scheduled pick-up points of the plurality of users are identical, pieces of route information for the plurality of users to all of the plurality of vehicles before authenticating a user boarding the vehicle;
selecting, after authentication of the user boarding the vehicle, a piece of route information for the authenticated user from pieces of route information for the plurality of users; and
driving the vehicle based on the selected route information or assisting driving of the vehicle based on the selected route information.
